# EUROPÄISCHE PATENTANMELDUNG

(11) **EP 1 637 410 A2**
(43) Veröffentlichungstag der Anmeldung: **22.03.2006**
(21) Anmeldenummer: 05019714.4
(22) Anmeldetag: 09.09.2005
(51) Int. Cl.: B60R 21/20, F16B 17/00

(54) **Befestigungsvorrichtung, insbesondere für Insassenrückhaltesysteme von Kraftfahrzeugen**

(30) Priorität: 16.09.2004 DE 202004014451 U
(71) Anmelder: TRW Automotive Safety Systems GmbH, 63743 Aschaffenburg (DE)
(72) Erfinder: Frisch, Ralph, 63776 Mömbris (DE); Szidzek, Claudia, 63785 Obernburg (DE); Schneider, Michael Dr., 63834 Sulzbach (DE)
(74) Vertreter: Kitzhofer, Thomas

(57) **Zusammenfassung**

Eine Befestigungsvorrichtung, insbesondere für Insassenrückhaltesysteme von Kraftfahrzeugen umfaßt ein erstes Verbindungselement, das plastisch tordierbare Laschen (24) mit jeweils einem Drehlappen (27) aufweist, und ein zweites Verbindungselement, das Aussparungen (29) aufweist, durch die die Drehlappen (27) der Laschen (24) hindurchgeführt werden können. Das zweite Verbindungselement hat im Bereich der Aussparungen (29) Positionsmittel (28), die die Drehlappen (27) des ersten Verbindungselements nach dem Tordieren der Laschen (24) in einer tordierten Stellung halten.

## Beschreibung

Die Erfindung betrifft eine Befestigungsvorrichtung, insbesondere für Insassenrückhaltesysteme von Kraftfahrzeugen, mit einem ersten Verbindungselement, das plastisch tordierbare Laschen mit jeweils einem Drehlappen aufweist, und einem zweiten Verbindungselement, das Aussparungen aufweist, durch die die Drehlappen der Laschen hindurchgeführt werden können.

Derartige Befestigungsvorrichtungen sind aus dem Stand der Technik bekannt und werden beispielsweise in der DE 101 53 861 A zur Befestigung eines Generatorträgers in einem Gehäuse eines Gassackmoduls verwendet. Hierfür sind im Gehäuse des Gassackmoduls Schlitze vorgesehen, in die am Generatorträger vorgesehene Befestigungslaschen eingefädelt werden können. Die Befestigungslaschen sind jeweils über einen schmalen Steg mit einem Fußabschnitt des Generatorträgers verbunden. Die schmalen Stege ermöglichen es, die Befestigungslaschen nach dem Einfädeln in die Schlitze zu verdrehen, so daß der Generatorträger im Modulgehäuse befestigt ist.

Die Erfindung schafft eine Befestigungsvorrichtung der oben genannten Art, bei der das zweite Verbindungselement im Bereich der Aussparungen Positionsmittel hat, die die Drehlappen des ersten Verbindungselements nach dem Tordieren der Laschen in einer tordierten Stellung halten. Die Positionsmittel stellen also eine Sicherung der bekannten Befestigungsvorrichtung dar und verhindern, daß die Laschen zurück tordiert werden und die Verbindung sich löst.

Vorzugsweise erfolgt diese Sicherung über einen Formschluß zwischen Drehlappen und Positioniermittel.

Die Positionsmittel können als Rastmittel ausgebildet sein, in die die Drehlappen einrasten. Rastmittel sind als einfache und effektive Möglichkeit zur Lagersicherung von Bauteilen bekannt und stellen auch in diesem Fall ein preiswertes Positionsmittel zur Sicherung der Verbindung dar.

Die Positionsmittel sind in einer Ausführungsform einstückig an das zweite Verbindungselement angeformt. Dies bietet den Vorteil, daß die Anzahl der Einzelbauteile reduziert wird.

In einer weiteren Ausführungsform sind die Laschen so ausgebildet, daß das erste Verbindungselement und das zweite Verbindungselement nach dem Tordieren der Laschen miteinander verspannt sind. Somit können Reibstellen und eine damit einhergehende Geräuschentwicklung vermieden werden. Dadurch, daß die beiden Verbindungselemente kein Spiel haben, wird auch ein unerwünschtes Klappern der Verbindungselemente bei einer Erschütterung der Befestigungsvorrichtung verhindert.

Die beiden Verbindungselemente können aus Metall sein, was den Vorteil bietet, daß bei einem Metall das plastische Tordieren der Laschen und die einstückige Anformung der Positionsmittel besonders gut möglich ist.

In einer weiteren Ausführungsform werden die Positionsmittel durch Kaltverformung des zweiten Verbindungselements gebildet. Diese Variante ist preiswert, besonders dann, wenn bereits bei der Formgebung des Verbindungselements die Positionsmittel gebildet werden.

Zwischen dem ersten Verbindungselement und dem zweiten Verbindungselement kann ein zu befestigendes Teil eingeklemmt werden. Damit werden zusätzliche Befestigungsmittel eingespart, was sowohl zu einer Kostenersparnis, als auch zu einer Reduzierung der Anzahl der Einzelbauteile führt.

In einer besonderen Ausführungsform ist das zu befestigende Teil ein zwischen den Verbindungselementen geklemmter Gassack oder Gasgenerator. Bei der Auslösung von Insassenrückhaltesystemen von Kraftfahrzeugen treten an den Systembauteilen, insbesondere am Gassack, große Kräfte auf. Die erfindungsgemäße Befestigungsvorrichtung bietet in diesem Fall eine einfache und gleichzeitig sichere Möglichkeit, den Gassack zwischen zwei Verbindungselementen zu befestigen.

Wenigstens eines der Verbindungselemente kann ein Gassackhalterahmen, ein Generatorträger oder ein Gasgenerator sein. Für die Verbindung dieser hoch beanspruchten Bauteile eines Insassenrückhaltesystems bietet die erfindungsgemäße Befestigungsvorrichtung bei ähnlicher Zuverlässigkeit der Verbindung einen insgesamt geringeren Aufwand als traditionelle Verbindungen, beispielsweise Schraubverbindungen.

Weitere Merkmale und Vorteile der Erfindung ergeben sich aus der folgenden Beschreibung einer bevorzugten Ausführungsform und aus den beigefügten Zeichnungen, auf die Bezug genommen wird. In den Zeichnungen zeigen:
- Figur 1 einen Teil eines Gassackmoduls mit einer erfindungsgemäßen Befestigungsvorrichtung in einer perspektivischen Draufsicht;
- Figur 2 einen schematischen Detailschnitt entlang der Linie II-II in Figur 1 mit zusätzlich eingeklemmtem Gassack;
- Figur 3 die Baugruppe aus Figur 1 in einer perspektivischen Untersicht; und
- Figur 4 ein Detail der perspektivischen Untersicht aus Figur 2 mit bereits tordierten Laschen.

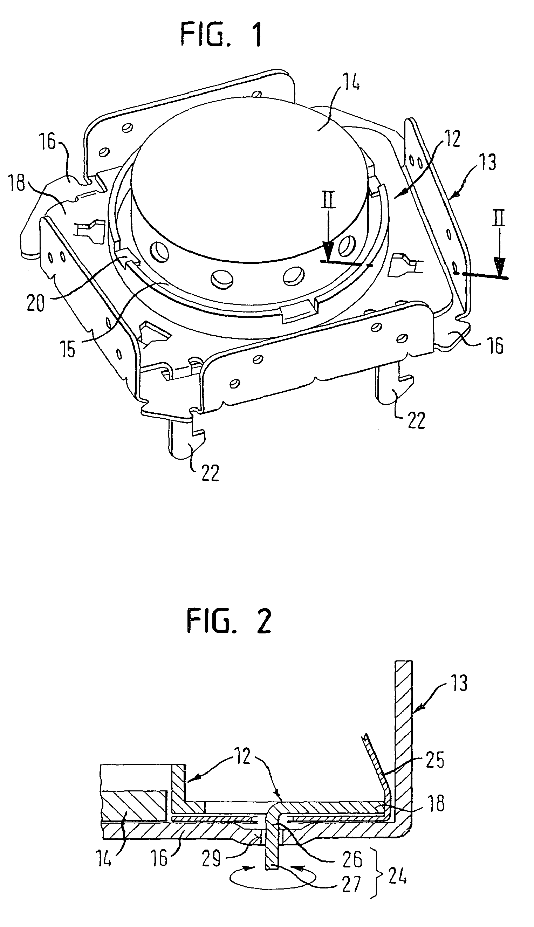

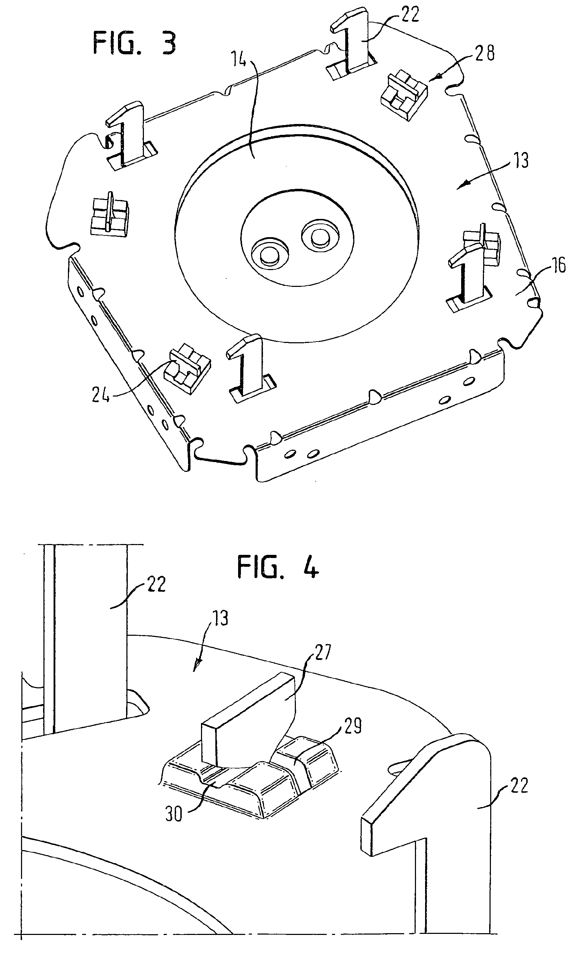

Die Figur 1 zeigt ein Gassackmodul mit einer Befestigungsvorrichtung mit einem ersten Verbindungselement, hier einem Halterahmen 12, einem zweiten Verbindungselement, hier einem Generatorträger 13 und einem zu befestigenden Teil, hier einem Gasgenerator 14. An dem zylinderförmigen Gasgenerator 14 ist ein randseitig umlaufender Generatorflansch 15 angeformt. Der Gasgenerator 14 ist so auf dem Generatorträger 13 positioniert, daß der Gasgenerator 14 eine kreisförmige Öffnung (siehe auch Fig. 3) eines Bodenblechs 16 des Generatorträgers 13 abdeckt. Dabei liegt der Generatorflansch 15 auf einem Rand der kreisförmigen Öffnung im Bodenblech 16 auf. Der Halterahmen 12 weist eine Grundplatte 18 mit einer weiteren kreisförmigen Öffnung auf. Diese Öffnung befindet sich in der Mitte der Grundplatte 18 und hat eine zylinderförmige Auflcantung mit vier radialen Vorsprüngen 20. Ferner sind am Rand der Grundplatte 18 vier Haken 22 zur weiteren Montage der Befestigungsvorrichtung nach unten abgebogen. Aus der Grundplatte 18 des Halterahmens 12 sind ferner vier Laschen 24 freigestanzt und nach unten gebogen (Fig. 2). In Figur 1 sind lediglich die durch das Stanzen entstandenen Fehlstellen in der Grundplatte 18 des Halterahmens 12 zu sehen. Der Halterahmen 12 ist so angeordnet, daß sich der Gasgenerator 14 durch die Öffnung des Halterahmens 12 erstreckt und die Vorsprünge 20 der zylinderförmigen Aufkantung des Halterahmens 12 so am Generatorflansch angreifen, daß der Gasgenerator 14 zwischen den Vorsprüngen 20 und dem Bodenblech 16 geklemmt ist. Wie in Fig. 1 dargestellt, erstrecken sich dabei die nach unten gebogenen Haken 22 und die Laschen 24 des Halterahmens 12 durch entsprechende Aussparungen im Bodenblech 16 des Generatorträgers 13.

Figur 2 zeigt ein Detail der Fig. 1 in einem Schnitt entlang der Linie II-II. Zusätzlich ist in dem Schnitt eine mögliche Anordnung eines weiteren zu befestigenden Teils dargestellt. Dieses weitere zu befestigende Teil ist in Fig. 2 ein Gassack 25, der zwischen dem Halterahmen 12 und dem Generatorträger 13 geklemmt wird. Der Gassack 25 hat im Bereich eines Gassackmundes Öffnungen zum Durchführen der Haken 22 und der Laschen 24. Aus Gründen der Übersichtlichkeit wurde in den weiteren Figuren auf eine Darstellung des Gassacks 25 verzichtet. Die Laschen 24 sind so ausgebildet, daß sie beim Ausstanzen über einen schmalen Steg 26 mit der Grundplatte 18 des Halterahmens 12 verbunden bleiben und sich in Richtung ihres freien Endes zu sogenannten Drehlappen 27 verbreitern. Die dem Steg 26 der Lasche 24 zugewandten Seiten des Drehlappens 27 liegen bei einer Tordierung der Laschen 24 an einem Positionsmittel 28 an. Das Positionsmittel 28 ist hier einstückig als Vertiefung im Generatorträger 13 angeformt. Eine derartige Ausführung der Lasche 24 und des Positionsmittels 28 ist möglich, weil die beiden Verbindungselemente aus Stahlblech sind.

Die Figuren 3 und 4 zeigen eine perspektivische Untersicht der Befestigungsvorrichtung aus Figur 1. Es sind deutlich die vier Laschen 24 des Halterahmens 12 zu sehen, die sich durch schlitzförmige Aussparungen 29 im Bodenblech 16 des Generatorträgers 13 erstrecken. Die Aussparungen 29 im Bodenblech 16 sind gerade so groß, daß die Drehlappen 27 durchgeführt werden können. Im Bereich der Aussparungen 29 für die Laschen 24 sind in Fig. 3 die Positionsmittel 28 zu erkennen; sie sind in diesem Fall durch Kaltverformung in dem Bodenblech 16 ausgeformte, quadratische Vertiefungen. In einer, auf den Gasgenerator 14 bezogenen, tangentialen Richtung weisen die quadratischen Vertiefungen die schlitzförmigen Aussparungen 29 auf. Senkrecht zu den schlitzförmigen Aussparungen 29 haben die quadratischen Vertiefungen jeweils eine linienförmige Einkerbung 30 (vgl. auch Fig. 4).

Figur 4 zeigt ein Detail der perspektivischen Untersicht aus Figur 3. Allerdings befindet sich der Drehlappen 27 bereits in einer tordierten Stellung; d.h. der Drehlappen 27 wurde bereits um 90° gedreht und somit der Steg 26 der Lasche 24 plastisch tordiert. Durch die Einkerbung 30 in der quadratischen Vertiefung des Generatorträgers 13 ist in diesem Fall das Positionsmittel 28 als Rastmittel ausgebildet. Dadurch, daß die dem Steg 26 zugewandten Seiten des Drehlappens 27 abgeschrägt sind, entsteht beim Tordieren der Lasche 24 über die quadratische Vertiefung des Bodenblechs 16 eine Verspannung zwischen dem Halterahmen 12 und dem Generatorträger 13. Diese Verspannung wirkt in Einschubrichtung der Lasche, also axial. Infolge dieser axialen Spannung rastet der Drehlappen 27 in der Einkerbung 30 der quadratischen Vertiefung ein.

## Patentansprüche

1. Befestigungsvorrichtung, insbesondere für Insassenrückhaltesysteme von Kraftfahrzeugen, mit einem ersten Verbindungselement, das plastisch tordierbare Laschen (24) mit jeweils einem Drehlappen (27) aufweist, und einem zweiten Verbindungselement, das Aussparungen (29) aufweist, durch die die Drehlappen (27) der Laschen (24) hindurchgeführt werden können, **dadurch gekennzeichnet, daß** das zweite Verbindungselement im Bereich der Aussparungen (29) Positionsmittel (28) hat, die die Drehlappen (27) des ersten Verbindungselements nach dem Tordieren der Laschen (24) in einer tordierten Stellung halten.

2. Befestigungsvorrichtung nach Anspruch 1, **dadurch gekennzeichnet, daß** die Positionsmittel (28) und die Drehlappen (27) formschlüssig ineinandergreifen.

3. Befestigungsvorrichtung nach Anspruch 1, **dadurch gekennzeichnet, daß** die Positionsmittel (28) als Rastmittel ausgebildet sind, in die die Drehlappen (27) einrasten können.

4. Befestigungsvorrichtung nach einem der vorhergehenden Ansprüche, **dadurch gekennzeichnet, daß** die Positionsmittel (28) einstückig im zweiten Verbindungselement ausgeformt sind.

5. Befestigungsvorrichtung nach einem der vorhergehenden Ansprüche, **dadurch gekennzeichnet, daß** die Laschen (24) so ausgebildet sind, daß das erste Verbindungselement und das zweite Verbindungselement nach dem Tordieren der Laschen (24) miteinander verspannt sind.

6. Befestigungsvorrichtung nach einem der vorhergehenden Ansprüche, **dadurch gekennzeichnet, daß** das erste und zweite Verbindungselement aus Metall ist.

7. Befestigungsvorrichtung nach einem der vorhergehenden Ansprüche, **dadurch gekennzeichnet, daß** die Positionsmittel (28) durch Kaltverformung des zweiten Verbindungselements gebildet werden.

8. Befestigungsvorrichtung nach einem der vorhergehenden Ansprüche, **dadurch gekennzeichnet, daß** zwischen dem ersten Verbindungselement und dem zweiten Verbindungselement ein zu befestigendes Teil eingeklemmt wird.

9. Befestigungsvorrichtung nach Anspruch 8, **dadurch gekennzeichnet, daß** das zu befestigende Teil ein zwischen den Verbindungselementen geklemmter Gassack (25) oder Gasgenerator (14) ist.

10. Befestigungsvorrichtung nach einem der vorhergehenden Ansprüche, **dadurch gekennzeichnet, daß** wenigstens eines der Verbindungselemente ein Gassackhalterahmen (12), ein Generatorträger (13) oder ein Gasgenerator (14) ist.
